# EUROPEAN PATENT SPECIFICATION

(11) **EP 3 122 542 B1**
(45) Date of publication and mention of the grant of the patent: **05.06.2019**
(21) Application number: 15769481.1
(22) Date of filing: 30.03.2015
(51) Int. Cl.: B29C 64/106, B29C 64/245, B33Y 30/00, B33Y 40/00

(54) **3D PRINT BED HAVING PERMANENT COATING**
3D-DRUCKBETT MIT PERMANENTBESCHICHTUNG
LIT D'IMPRESSION 3D AYANT UN REVÊTEMENT PERMANENT

(30) Priority: 28.03.2014 US 201461971759 P; 16.05.2014 US 201461994302 P
(43) Date of publication of application: 01.02.2017
(73) Proprietor: Ez Print, LLC, Cincinnati, OH 45212 (US); Ruff, Bradley, Cincinnati, OH 45220 (US); Vyas, Aniket, Loveland, OH 45140 (US)
(72) Inventor: RUFF, Bradley, Cincinnati, OH 45220 (US); VYAS, Aniket, Loveland, OH 45140 (US)
(74) Representative: Kuhnen & Wacker Patent- und Rechtsanwaltsbüro PartG mbB
(86) International application number: PCT/US2015/023255
(87) International publication number: WO 2015/149054

(56) References cited:
- EP-A1- 3 064 339
- EP-A2- 1 637 307
- WO-A1-99/37457
- WO-A1-2004/050323
- US-A1- 2003 004 600
- US-A1- 2008 006 966
- US-A1- 2008 150 186
- US-A1- 2008 271 875
- US-A1- 2011 027 594

## Description

### FIELD OF THE INVENTION

The present invention relates to a print bed for a 3D printer.

### BACKGROUND OF THE INVENTION

Three-dimensional (3-D) object printers, such as those which employ Fusion Deposition Modeling (FDM), are known. The printing process for such a device involves the deposition of printing material onto a printing platform, also referred to as a print bed. The deposited material may be melted into a pliable state, extruded through a heated nozzle and built up, layer by layer, until the final result is a 3-D object. Because the layers are deposited in sequence on top of each other, print success and quality depend upon the ability to maintain registration of the object with the extruder nozzle throughout the duration of the print job to ensure that each stacked layer registers with the previous one.

Print success and quality may also depend upon adequate adhesion between the printed object and the print bed. Sometimes the first few layers of the printed object do not have sufficient adherence to the print bed, causing the printed object to shift, warp, or delaminate from the print bed, resulting in a failed or poor quality printed object. The print beds for known FDM style 3-D printers are typically made of metal, glass or acrylic. These print beds are not considered consumables, nor are they ideally suited to provide reliable surfaces on which the 3-D printed objects can adhere solidly and consistently. Therefore, it is preferable to pretreat and/or cover the print bed surface of a FDM style 3-D printer prior to printing an object so as to prevent damaging the print bed and to improve the likelihood that the printed object will adhere adequately to the print bed for the duration of the print.

Manufacturers and users of FDM style 3-D printers often require or recommend covering the print bed surface with heat resistant polyimide film or paper masking tape (typically used by painters), and/or pre-treating the surface with hairspray, special water-soluble glue or other liquid treatment solutions. These applications are intended to hold the 3-D printed object to the surface while it is printing and to preserve the longevity of the original print bed. These print bed covering materials are intended to provide a removable and replaceable surface on which to print, and in some cases take the wear and tear that would otherwise be inflicted upon the print bed.

Printer manufacturers may also recommend using a heated print bed for 3-D printing deposit material that requires slower cooling time, such as ABS (acrylonitrile butadiene styrene). Often times the heated print bed is heated to temperature up to 100-130 °C. In such cases, the print bed cover material must be able to function while be exposed to the elevated temperature of the print bed.

Accordingly, heat resistant polyimide films may be used for heated print beds, while paper masking tape cannot. Other types of deposit material, such as PLA (polylactide), are not slow cooling and do not require a heat tolerant covering material, such as paper masking tape. In general these two common alternatives (heat resistant polyimide films and paper masking tapes) cannot be used interchangeably with different deposit materials due to their differing properties and heat resistant limitations. Thus, there is a need for a single type of print bed cover which may be used with both heated and non-heated print beds.

Further, there are number of disadvantages that may arise from using known print bed covers. For example, commonly used heat resistant polyimide films or paper masking tapes may be difficult and tedious to apply or install on the print bed. Polyimide films and paper masking tape generally are supplied on a roll and need to be cut and resized for the print bed on which they are installed. If the width of the supplied roll is not as wide as the print bed, then multiple sheets of the film or tape may need to be applied side by side in order to cover the print bed. However, it is extremely important that the print bed surface be flat and level to the extruder nozzle; i.e., the gap between the extruder nozzle and top surface of the print bed needs to be uniform over the entirety of the print bed. Failure to provide a uniform distance between the extruder and the print bed cover may result in defective print objects and even damage or tearing of the cover if the extruder nozzle contacts it. Therefore, for best 3-D printing results, the films and tapes need to be applied without overlapping seams, folds, creases or air bubbles under or in the covering surface since such irregularities may cause variation of the distance between the extruder nozzle and the print surface. Because the known films and tapes are typically very thin, they are difficult to work with in a manner that avoids overlapping and air bubbles, and are susceptible to unwanted stretching, folding and creasing while being adhered to the print bed.

Another difficulty which arises from using polyimide film or paper masking tape is that they may not provide sufficient adhesion to keep the 3-D printed object from moving or warping upward during the printing process, resulting in a failed or defective printed object. Alternatively, in some instances, polyimide film or paper masking tape provide so much adhesion that upon completion, the 3-D printed object is difficult to remove from the print surface, which can result in damage to the print bed cover or printing device, or even in personal injury. Excessive adhesion may be further complicated by the thinness of the polyimide film and papermasking tape. When adhesion is too great, the film or tape may be damaged when the printed object is removed from it, or when leftover deposited material is scraped off. The foregoing challenges may result in the need for frequent replacement of the polyimide film or paper masking tape.

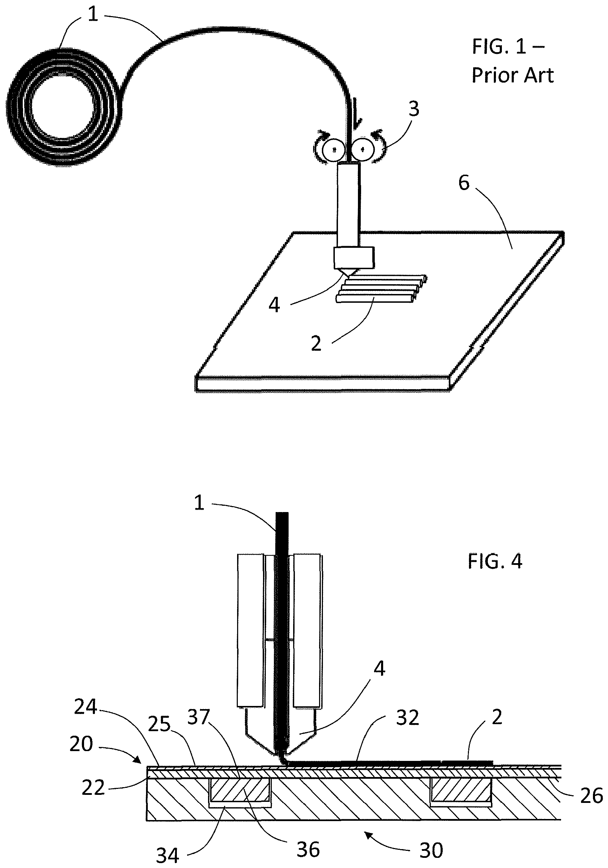

There are many different types of 3D printers and method of Fusion Deposition Modeling (FDM). A very common type of consumer 3D printer and process is called Fused Filament Fabrication (FFF). Figure 1 shows a prior art FFF-style 3D printing arrangement involving the melting and extruding of a thermoplastic filament 1 and selectively depositing one or more lines 2 of plastic print material into one layer at a time onto an upper surface of a print bed 6, and to build the printed object by depositing a plurality of successive layers to form the layers of plastic print material into a print object. The filament is fed through a driving mechanism (a pair of oppositely-rotating rollers 3) and through a heated nozzle 4, where the filament is melted and the molten plastic ejected onto the print bed 6. A three dimensional object is built up one layer at a time. The build plate or print bed 6 with the temporary coating or tape applied is then mounted onto the 3D printer (not shown) in the required orientation for proper printing, as is well known in the art. The print bed 6 is then attached to the 3D printer using clips, tape, tabs, and other well known mechanical or physical fasteners.

In recent years, the cost of 3D printer has been reduced to the point where it is affordable for the average consumer. As described above, many of the low cost printers suffer from poor reliability, including in getting the first layer of print to stick to the build surface of the print bed. The "do-it-yourself" (DIY) solutions described above require the user to apply the temporary coating or the tape to the print bed, which have a limited useful life. There are various learning curves and levels of effectiveness associated with each of these solutions.

Another option is to use a heated bed. This is effective but increases the cost of the printer considerably. To the experienced DIYer and maker crowd, these solutions may be adequate for now. However, as consumer 3D printers go more mainstream and reach a wider audience of users, these solutions become too difficult and involved for the average consumer, and are cumbersome and costly in the long run.

US Patent Publ. 2015/0037527 discloses a cover for a conventional print bed for a 3D printer, comprising a polycarbonate substrate having an upper surface and a lower surface; and an adhesive layer provided on the polycarbonate substrate lower surface for attachment of the cover (the polycarbonate layer) onto the upper surface of the conventional print bed.

Despite these efforts, there remains a need to improve the easy, flexibility and effectiveness of the print bed for printing 3D objects. Document EP-A-1637307 discloses a coated print bed for a 3D printer, comprising: a substrate plate that is a planar material having an upper surface; and a permanent print-surface coating, wherein the composite coating composition has been applied onto the upper surface of the substrate plate and hardened to form the permanent print-surface coating having a smooth, planar interface surface that is permanently secured to the upper surface of the print bed substrate plate. Document WO-A-9937457 discloses a method for printing an object, comprising the steps of providing a 3D printer configured for Fused Filament Fabrication printing, preparing a print surface comprising the steps of applying an adhesive thermoplastic material onto an upper surface of a planar substrate to form a smooth and planar coating, and attaching the coated print bed to the 3D printer; and printing a print object directly upon a surface of the permanent print surface coating of the coated print bed.

### SUMMARY OF THE INVENTION

The invention is defined by a coated print bed in accordance with claim 1 and by a method for printing an object in accordance with claim 6. The present invention provides a coated print bed for a 3D printer, comprising a permanent print-surface coating secured to a print bed substrate plate. The permanent print-surface coating provides an interface layer between a first layer of the applied plastic print material and the coated print bed, and that provides a high degree of adhesion of the applied plastic print material to the coated print bed. The permanent print-surface coating is selected to provide a level of adhesion sufficient for removal of the printed object at the end of the printing task. The permanent print-surface coating does not require the end user to apply anything additional to the surface of the print bed to begin printing ("plug and play").

The present invention does not require that the coated print bed is a heated print

The permanent coating can be applied to any substrate material that is useful as a print bed. The permanent print-surface coating is prepared onto an upper surface of a substrate plate with a smooth, planar interface surface. Generally the substrate is a planar material that can provide sufficient mechanical rigidity and a flat and smooth surface for printing. The method of applying the permanent print-surface coating can be chosen based on the resulting thickness, surface finish, clarity, and final performance. The interface surface of the permanent print-surface coating, with the coated print bed affixed to the 3D printer, preferably has substantially a perfectly flat surface with the coated print bed under no external strain or stress.

According to the invention, the composition of the permanent coating applied to the print bed substrate comprises a composite material comprising a matrix-forming compound or composition, and an adhesive material. Each component material of the composite can comprise between 0.1% and 99% of the final permanent print surface coating.

In another aspect of the disclosure, the composition of the permanent coating that is applied to the print bed substrate comprises a mixture of a thermosetting polymer, which provides mechanical strength and performance, and a thermoplastic material, which provides adhesion performance for the 3D print material. The mixture delivers a reliable and robust permanent coating with a sufficient and suitable adhesion for the printed plastic print material and to the 3D printed object.

A further aspect of the invention is a process for printing an object in accordance with claim 6.

### BRIEF DESCRIPTION OF THE FIGURES

Figure 1 illustrates a 3D printing system, known in the prior art.
Figure 2 shows a perspective view of a coated print bed of the present invention, including a permanent print-surface coating permanently secured to a print bed substrate plate, attached to an upper surface of an intermediate base structure.
Figure 3 shows an exploded view of the coated print bed of Figure 2.
Figure 4 shows a cross-sectional view of the coated print bed of Figure 2, taken through line 4-4, with a 3-D print nozzle depositing a printed line of plastic material.

### DETAILED DESCRIPTION OF THE INVENTION

### a) Substrate

The print bed substrate can be made from a number of suitable materials, including glass, ceramic, metals, including steel, stainless steel, aluminum, wood, and other rigid, resilient plastics sheets or composites or laminates thereof. A suitable substrate has sufficient rigidity to maintain its shape and dimensions under a wide variety of use conditions, and has sufficient resilience to permit the coated substrate to be flexed or slightly bent manually by the user to aid in removal of the printed object, without damaging or altering its shape or dimensions. A small portion of the printed object can detach from the surface of the permanent coating when the coated print bed plate is flexed, allowing for the rest of the printed object to be removed more easily. The printed object then breaks loose from the coated print bed surface without damaging the coating, or the printed object.

A suitable substrate is a steel or other ferromagnetic material that is attracted to a magnet.

### b) Coating Material

The permanent print surface coating can comprise a single material in a layer, or a composite material in a layer, or a laminate of two or more layers of the same or different materials.

In a composite material, a component material of the composite can comprise of a matrix-forming compound or composition. A component material of the composite can also comprise one or more filler material in combination with the matrix-forming compound or composition and a thermoplastic adhesive material.

Each component material of the composite can comprise between 0.1% and 99% of the final permanent print surface coating, including at least about 1%, at least about 2%, at least about 5%, at least about 10%, at least about 15%, at least about 20%, at least about 25%, at least about 30%, at least about 35%, at least about 40%, at least about 55%, at least about 50%, at least about 55%, at least about 60%, at least about 65%, at least about 70%, at least about 75%, at least about 80%, at least about 85%, at least about 90%, and at least about 95%, and up to about 99%, including up to about 98%, up to about 95%, up to about 90%, up to about 85%, up to about 80%, up to about 75%, up to about 70%, up to about 65%, up to about 60%, up to about 55%, up to about 50%, up to about 45%, up to about 40%, up to about 35%, up to about 30%, up to about 25%, up to about 20%, up to about 15%, up to about 10%, up to about 5%, up to about 4%, and up to about 1%.

A non-limiting list of a matrix-forming compound or composition can include a solvent- or water-based epoxy resin. Non-limiting examples of suitable or useful epoxy resin include Bisphenol A diglycidyl ether (commonly abbreviated BADGE or DGEBA), tetraglycidyl methylenedianiline (TGMDA), and cycloaliphatic epoxy, and a mixture thereof, which are crosslinked using a hardener or curing agent.

Common curing agents or hardeners for epoxy resins are a polyamine, an aminoamide, a phenolic compound, a cyanoacrylate, an acid based hardener, and an anhydride based hardener. The cross linking increases the hardness and duality of the resulting permanent print surface coating. The curing agent or hardener can comprise up to 40% by weight (up to about 49% by volume) of the resulting permanent print surface coating.

An alternative curing agent can comprise a polyamide-based curing agent, or curing agent having a functional group capable of forming a hydrogen bond with molten nylon filament.

Other examples of a matrix-forming compound or composition can include an epoxy ester, an alkyd, a polyester resin, a phenol formaldehyde resin (which can include an epoxy Novolac resin, available from the Dow Chemical Company (http://msdssearch.dow.com/ PublishedLiteratureDOWCOM/dh_0030/0901b8038003042d.pdf?filepath=/296-00279.pdf&fromPage=GetDoc,), and a base-catalyzed phenol-formaldehyde Resole resins, polyamimc acid / polyimide, and polyurethane/polyurea. Other suitable materials can include polyIimide-amide, polyamic acid cured to form polyimide, and polyether ether ketone (PEEK).

A thermoset-type crosslinkable compound can be cross-linked either with a curing agent, by well known means, or without a curing agent by heating of the resin material to an elevated temperature (for example, up to 100-120 °C), by allowing a solvent to evaporate, or by exposing the resin material to UV light.

The permanent print surface coating, formed by curing the matrix-forming compound or composition, preferably has, as physical properties, strength (high modulus), stiffness, resilience, hardness, chemical and physical stable at high temperature over 300 °C, and high adherence to a variety of substrate materials.

The resin material used for forming the cured matrix-forming compound or composition is preferable one that provides one or more of the following: blends well with a variety of compatible other polymers and resins, not expensive, non-toxic, 100% water based, or partially or substantially water based, and environmentally friendly. The matrix-forming compound provides a continuous epoxy matrix that holds or contains the fillers and/or adhesive materials.

The adhesive material includes a thermoplastic material. The adhesive material can include an acrylic, including polyacrylic acid, styrene acrylic, carboxylated styrene-butadiene latex, and non-carboxylated styrene-butadiene latex; a polystyrene; a nylon (also known as a polyamide);, and a mixture or blend thereof.

The thermoplastic component provides increased adhesion of the printed object to the surface of the resulting permanent print surface coating, and provides flexibility and strength to matrix material component of the permanent print surface coating.

The adhesive material can also provide bonding (chemically) between the applied and cured permanent print surface coating, and the upper surface of the substrate. In an aspect of this feature, the substrate is a glass plate with a glass surface. The bonding with the glass surface improves the mechanical strength and increases the durability of the permanent print surface coating. The adhesion promoter material can have one functional group that bonds with the glass, and a desperate group that will bond with the matrix material or composite materials of the coating. Silanes with epoxy end groups can be used for this purpose.

The adhesive material is typically provided in an emulsion form, and is blended with the curable matrix-forming compound or composition by well known means, resulting in a composite coating composition. Following application of the composite coating composition to the print bed, the composite coating composition is cured to the permanent print surface coating. The adhesive component provides a degree of adhesion to the permanent print surface coating, and results in a re-usable coating that is partial tacky in nature and has a low glass transition temperature. When the permanent print surface coating (typically at room temperature or heated up to about 100-110 °C) is contacted directly with the molten, printed plastic resin of the thermoplastic filament, the adhesive material in the portion of the permanent print surface coating contacted by the molten plastic can soften, which promotes sticking or adhesion of the deposited molten plastic to the surface of the permanent print surface coating. The matrix-forming compound or composition component maintains the integrity of the permanent print surface coating, while also preventing the adhesive component from attaching to printed object when the printed object is removed from the surface of the permanent print surface coating after 3D printing is finished.

Without being bound by any particular theory, it is believed that the presence of polar groups in an adhesive material, including carboxyl, acetate, and amide groups, can promote an interaction between the thermoplastic filament material (for example, acrylonitrile butadiene styrene, commonly known as ABS, and polylactic acid (PLA)) and permanent print surface coating via dipole-dipole, ion-induced dipole, dipole-induced dipole non-covalent interaction. Also the presence of polystyrene (an aromatic ring) in the permanent print surface coating can lead to pi-stacking (the attractive, non-covalent interactions between aromatic rings) with the aromatic ring of the ABS (the thermoplastic filament material). Also, styrene-butadiene on solidifying tends to form hard crystallizable segments and soft elastic butadiene segments, with a low Tg.

The filler can be an elastomer, other adhesives, a thermoplastics, and a nanoparticle. The filler can include a pure acrylic resin, a styrene acrylic latex, a styrene butadiene acrylate copolymer, a low molecular weight polyamide, a rubber, a particulate material including a sand (SiO₂), a clay, a talc, a pigments, for example, TiO₂, prussian blue, and others (used for modifying or controlling a property of the permanent print surface coating, including its texture and color), a graphene or carbon nanotube (to enhance thermal stability and to provide electro-magnetic properties to the permanent print surface coating, for example, for automatic adjustment of print plate), and a fiber glass, carbon fiber, or other fiber in either short or continuous form.

Generally a permanent print surface coating containing a thermoset material is harder, more durable, and able to survive higher temperatures, than a coating containing a thermoplastic material. The additive components (adhesives and fillers) are used to increase the adhesion of the printed layer of thermoplastic filament to the surface of the permanent print surface coating. The type and ratio of the different additive components can vary depending on the intended application. The filler material can be added to the matrix component (and any required solvent) in a weight ratio (filler:matrix) of at least 1:1.5, and up to about 1:0.04, including about 1:1, about 1:0.8, about 1:0.6, about 1:0.5, about 1:0.4, and others. After addition of a curing agent or hardener, the mixture was stirred at high speed for 1-1.5 hours, and applied to the surface of a suitable print bed substrate.

The process for mixing, blending or adding together the adhesives, fillers, including a thermoplastic component, can be, but is not limited to, mixing, high-shear mixing or stirring. The thermoplastic component materials can be purchased "off the shelf' or synthesized specifically for this application. Likewise, the process for mixing, blending or adding the matrix material with or into the adhesives and fillers can be, but is not limited to, mixing, high-shear mixing or stirring.

The coating may also contain an optional emulsifier that promotes even blending of the matrix-forming compound or composition, and the adhesives and/or fillers, to prevent separation of the different polymer with different solubility features into phases, or to aid in stirring or mixing while processing. The emulsifier can also minimize the grain and grain boundary sizes, which provides a more uniform coating, both in performance and aesthetics. The emulsifier can include an ionic or non-ionic surfactant. Non-limiting examples of the surfactant can include Pluronic F-127 and Triton X-100. The final permanent print surface coating can contain up to 2% emulsifier by weight (roughly up to 2% by volume).

The coating may also contain an optional solvent that likewise promotes even blending of the matrix-forming compound or composition and the adhesives and/or fillers, prevents separation of the different polymer with different solubility features into phases, or aids in stirring or mixing while processing. Non-limiting examples of the surfactant can include NMP (n-methyl pyrollidone), alcohols (C₁-C₁₀) including ethanol and isopropyl alcohol, toluene, methyl ethyl ketone (MEK), acetone, water, and a mixture thereof. The solvent decreases the viscosity of the coating composition during mixing and coating application, and provides a smoother coating surface. The solvent can then be evaporated during and/or after the coating is applied to the surface to shorten the time for coating formation..

After the coating solution has been prepared, it is applied to an upper surface of a suitable print bed substrate in an even distribution to provide a flat planar surface. The surface of a suitable print bed substrate is cleaned and prepared for coating by washing, such as with a soap solution, acetone, an alcohol, aqua regia, or a combination thereof.

The surface of a print bed substrate (which can be glass, metal or ceramic) can be pre-treated with silane to promote adhesion of permanent coating to the surface of the substrate, and improve the hardness of the epoxy coating attached to the silane.

Alternatively, a pre-treatment can comprise an epoxy primer layer that adheres well to metallic substrate, and bonds strongly to the coating formulation.

The thickness of the resulting coating on the print bed substrate is typically at least about 0.5 mils (12 microns), and up to about 5 mils (125 microns). In one embodiment, the thickness is about 1 mils (25 microns) to 2 mils (250 microns).

The coating can be applied using standard industrial and/or commercial methods, including spraying (including a high volume, low pressure spray technique), solution casting, roll coating, dip coating, curtain coating, slot coating, slide coating, spin coating, roll-to-roll transfer coating, electrostatic coating, and vacuum coating. Spray painting allows for the application of variable thicknesses of the coating. Multiple layers can be applied, to build-up and increase the thickness of the coating. Solution casting is a process allowing the solvent of a diluted solution to evaporate on the surface of the substrate, leaving a thin coating on the substrate. The coating can also be applied via electrostatic coating. This process produces exceptionally even coatings due to the electro static forces. Electrostatic coating also allows for less solvent to be used because it can process higher viscosities than traditional painting. Spin coating is a process where the substrate is rotated at a high angular velocity, and a small amount of coating is applied to the center. The centripetal force pushes the liquid out to cover the entire surface of the substrate, producing very thin coatings.

The coating can also be applied by brushing the coating onto the substrate of the substrate. Brush coating can produce a surface texture in the coating that may aid in the adhesion of the printed object by increasing the surface area. Brush-applied coatings can also require less solvent to form and process.

After the coating solution is applied to the upper surface of the print bed substrate in an even, flat distribution surface, the applied surface is hardened or cured by means described herein into the permanent print surface coating, ready for delivery to the customer for use.

In an alternative process, a free standing film can be prepared from the coating composition, stretched in order to release mechanical stresses, and then glued or adhered to the upper surface of the print bed substrate. That is, the attachment or adhesion of the permanent coating requires an adhesive material between the sheet and the surface of the print bed.

The final permanent coating is preferably completely homogeneous, with a smooth, flat surface with no imperfections. It can also show multi-phase morphology. The coating may show distinct phases in liquid form before coating occurs and maintain this morphology to the final coating. Another possibility is during the process of curing of the coating on the substrate, a crystalline component, for example in the filler material, can begin to crystallize, which can lead to two phases within the resultant coating, including an amorphous phase from the matrix material or an amorphous component in the filler or adhesive, and a crystalline phase. The crystalline phase typically distributes within the amorphous matrix throughout the coating.

An aspect of the invention includes a coating using for adhering a printed filament material at an elevated temperature (above room temperature) using a heated print bed, and to which the printed object will lose adhesion or loosen after the print plate has cooled, for example, toward room temperature, allowing the object to be removed with very little or no external force.

In another embodiment of the disclosure, the coated printer plate or substrate thereof can be coated with a paint to provide a color. The opposite surfaces of the plate or substrate can be the same or different colors, to provide different functions or aesthetics. One or both surfaces can be coated with a green colored paint or material that can help hide surface imperfections, and also provide a customer with the feeling that the product supports environmentally responsible practices. In fact, 3D printing is naturally more responsible practice for making an object, because it uses an additive process, rather than a subtractive practice such as traditional machining or milling, and thus generates less waste. One or both surfaces of the plate or substrate can be colored white, which can allow for the visible inspection for surface contaminates. Contaminates can exist due to the environmental precipitation in the form of dust or from handling in the form of finger print oil, or any other factor. The white color also contrasts with another-colored print filament plastic, so that the use can visually determine if any small piece of the printed object remains after the object is removed.

### Magnetically-attachable coated print beds

A further aspect of the present disclosure is the coated printer bed of the invention that can be magnetically attached to a matching intermediate base structure that is attached to and remains attached to the 3D printer during use. The intermediate base structure is attached so that it is not easily removed from the 3D printer. The intermediate base structure is configured so that the permanent coated print bed can only be associated with (attached to) the intermediate base structure in a manner that matches the orientation and positioning requirements of the printer system.

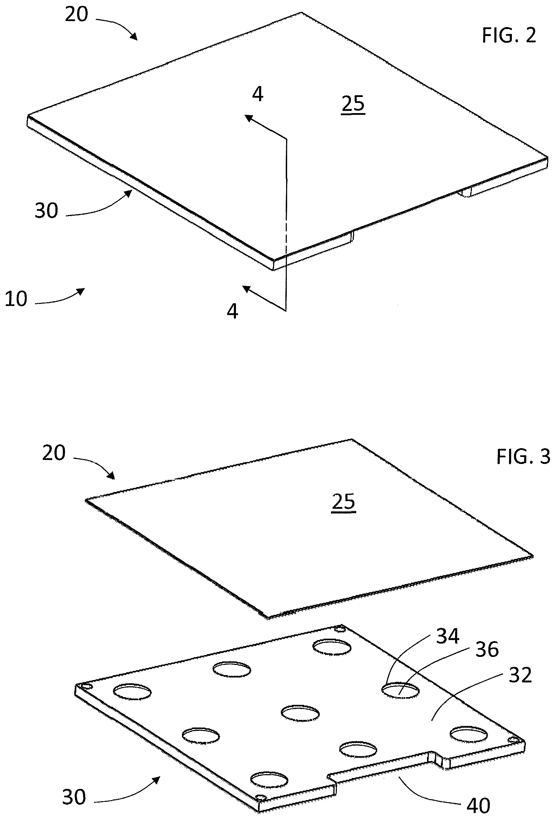

The coated printer bed of the invention associates with or attaches to the intermediate base structure is a "quick-release" manner that allows the coated print bed plate to be quickly and easily removed from the intermediate base structure. As shown in Figure 3, the intermediate base structure 30 has a recess 40 in an edge formed to permit the user to place fingers with the recess and to raise the edge of the coated print plate 20 up off the upper surface of the intermediate base structure 30. The removed coated print bed can then be manually handled during removal of the printed object. The printed object can be removed from the separated coated print bed. The allows the user to work more carefully to remove the printed object from the print bed, without necessarily using an edge of the blade of a scraper under an edge of the printed object, to leverage and pry the printed object off of the coated print bed, which can damage the 3D printer, or cause the mounted or fixed printing bed to go out of alignment. A scraper or prying device can also scratch or otherwise damage the printed object, or the print bed.

The substrate of the coated printer bed can comprise a metal or a ferromagnetic material, over which the coating is applied. The gauge or thickness of a steel substrate typically has sufficient flexibility to allow the user to slightly bend the bed plate. The steel or other ferromagnetic material can be attached to the intermediate base structure using magnets mounted into the intermediate base structure. The strength of the magnetic attraction is sufficient to hold the coated print bed tightly and in the proper orientation and position against the 3D printer, despite the relatively thinness and flexibility of the coated print bed. Preferably, the magnets, and the resulting magnetic forces, are distributed across the area of the intermediate base structure to provide uniform attachment of the coated print bed. Conventional attachment clips only apply force at the edges of a print bed, and may not ensure that the center of the print bed is tightly secured to the print base. This improves and controls the planality and securing of the coated print bed to the intermediate base structure with the embedded magnets.

The intermediate base structure onto which coated print bed is attached, can be made of any rigid, resilient material that will maintain its shape, dimension, and orientation under normal use and handling. A suitable material is aluminum, a thermoplastic, or glass. Aluminum is a better choice when a heated print bed is used, because aluminum conducts heat very well. A cast aluminum structure has little internal stresses from its manufacturing. The upper surface on which the print bed is attached can then be machined for flatness and planality.

Glass is a lower cost alternative to aluminum, and is better suited for room temperature applications where heat distribution is not important. The glass structure can remain flat from production.

The magnets can be press fitted or adhesively fixed within recesses in the upper surface of the intermediate base structure, by well known means. The magnets can be permanent magnets, include neodymium or similar magnets, ferrite or ceramic magnets, or electromagnets and electro-permanent magnets, which can secure the print plate with a large though releaseable magnetic force.

The well-distributed plurality of magnets across the upper surface area of the intermediate base structure, to provide uniform attachment of the coated print bed base, also causes the slightly flexible and resilient coated print bed plate to conform to the near-perfectly flat and planar upper surface of the intermediate base structure. The magnets draw the coated metal printed-bed substrate to take its flat and planar surface shape, even when the coated metal printed-bed substrate is slightly curl or curved when separated. Thus, coatcd metal printcd-bcd substrate itself does not need to be perfectly flat on its own, but will adapt to the flat and planar surface of the intermediate base structure when magnetically attached.

Figures 2-4 show a coated print bed 20 of the present invention, including a permanent print-surface coating 24 permanently secured to a print bed substrate plate 22. The permanent print-surface coating 24 has an upper surface 25 for 3D printing. The coated print bed 20 is releasably attached to an upper surface 32 of an intermediate base structure 30. The upper surface 32 of the intermediate base structure 30 is flat and planar, and has a plurality of bores 34 formed through the upper surface 32, including along the perimeter and the center area of the intermediate base structure 30. Inserted and secured into the bores 34 are magnets 36, which are positioned with a magnetic upper surface 37 that is level, or nearly level, with the upper surface 32 of the intermediate base structure 30.

### Formulation Performance Screening Test

The following tests were employed to provide a course determination of whether a particular coating formulation may be minimally effective for releasing a printed object printed with a conventional filament material.

### a) Adhesive force testing for room temperature printing with PLA:

A coating is prepared and applied to a print bed surface. An object with a solid 0.5" circular bottom surface formed from a first three layers is printed on the coating, using common printing practices, including an extruder temperature of 210 °C, having the plastic deposited by two concentric outlines, followed by linear in-fill, with the deposition head traveling at 30mm/s. The Gcode is generated by Cura 15.01 (open source program).

Removal of the printed PLA object from the print surface requires a pressure of between 3-5 KPa applied normal to the print surface. This removal force remains substantially constant for at least 50 repeated tests.

### b) Adhesive force testing for higher temperature printing with ABS:

Using the same coating and object printing steps as in a) for PLA, the removal of the printed ABS object from the print surface requires a pressure of at least 6 kPa when the temperature of the surface of the permanent coating remains above 100 °C. The removal pressure then falls to less than 2KPa when the temperature of the surface of the permanent coating cools to 50 °C or lower.

### Formulation Examples

Following are the ingredients used in making the curable coating compositions that are applied to a print bed substrate.

| **Formula 1A** | **Ingredient** | **Weight %** |
|---|---|---|
| | water | 73 |
| | Epoxy (water based emulsion) | 5 |
| | Acryclic Acid (water based emulsion) | 12 |
| | Curing Agent | 1 |
| | Isopropyl alcohol | 9 |
| | Total | 100 |

| **Formula 1B** | **Ingredient** | **Weight %** |
|---|---|---|
| | water | 73 |
| | Nano-clay (Montmorillonite Na+)/Other filler - Glass powder/mica/pigments | 0.1 |
| | Epoxy | 5 |
| | Acryclic Acid (water based emulsion) | 12 |
| | Curing Agent | 1 |
| | Isopropyl alcohol | 8.9 |
| | Total | 100 |

| **Formula 2A** | **Ingredient** | **Weight %** |
|---|---|---|
| | water | 72 |
| | Epoxy (water based emulsion) | 5 |
| | Carboxylated styrene-butadiene latex emulsion | 12 |
| | Curing Agent | 1 |
| | Isopropyl alcohol | 9 |
| | Total | 100 |

| **Formula 2B** | **Ingredient** | **Weight %** |
|---|---|---|
| | water | 73 |
| | Nano-clay (Montmorillonite Na+)/Other fillers (glass powder, mica, pigments) | 0.1 |
| | Epoxy (waterbased emulsion) | 5 |
| | Carboxylated styrene-butadiene latex emulsion | 12 |
| | Curing Agent | 1 |
| | Isopropyl alcohol | 8.9 |
| | Total | 100 |

| **Formula 3A** | **Ingredient** | **Weight %** |
|---|---|---|
| | water | 72 |
| | Epoxy (waterborne/solvent borne) | 5 |
| | Polystyrene solution in toluene | 12 |
| | Curing Agent | 1 |
| | Isopropyl alcohol | 9 |
| | Total | 100 |

| **Formula 3B** | **Ingredient** | **Weight %** |
|---|---|---|
| | Water | 73 |
| | Nano-clay (Montmorillonite Na+)/Other fillers (glass powder, mica, pigments) | 0.1 |
| | Epoxy | 5 |
| | polystyrene (in toluene) | 12 |
| | Curing Agent | 1 |
| | Isopropyl alcohol | 8.9 |
| | Total | 100 |

| **Formula 4A** | **Ingredient** | **Weight %** |
|---|---|---|
| | water | 72 |
| | Epoxy (waterborne/solvent borne) | 5 |
| | Polystyrene solution in toluene | 12 |
| | Curing Agent | 1 |
| | Isopropyl alcohol | 9 |
| | Total | 100 |

| **Formula 4B** | **Ingredient** | **Weight %** |
|---|---|---|
| | water | 73 |
| | Nano-clay (Montmorillonite Na+)/Other fillers (glass powder, mica, pigments) | 0.1 |
| | Epoxy | 5 |
| | polystyrene (in toluene) | 12 |
| | Curing Agent | 1 |
| | Isopropyl alcohol | 8.9 |
| | Total | 100 |

The epoxy is EDGBA, 52-55% solids, and available as EPI-REZ™ Resin 5522-WY-55 from Hexion.

Acrylic acid is 47.5-48.5% solids, having a Tg of 25-35 °C, and available as Rovene® 6117 from Mallard Creek Products.

Carboxylated styrene-butadiene latex is 52-54% solids, and available as Rovene® 4049 from Mallard Creek Products.

## Claims

1. A coated print bed (20) for a 3D printer, comprising:
a) a substrate plate (22) that is a planar material having an upper surface (32); and
b) a permanent print-surface coating (24) comprising a composite material in a layer, wherein the composite coating composition has been applied onto the upper surface of the substrate plate and hardened or cured to form the permanent print-surface coating having a smooth, planar interface surface that is permanently secured to the upper surface of the print bed substrate plate, and that provides an adhesive interface layer between a first layer of an applied plastic print material and the coated print bed, wherein the composite material comprises:
(1) a matrix-forming compound or composition, and
(2) an adhesive material comprising a thermoplastic material,
wherein the adhesive thermoplastic material in a portion of the permanent print-surface coating can soften when contacted by the molten plastic of the applied plastic print material, promoting adhesion of the molten plastic deposited onto the surface of the permanent print-surface coating; and
wherein the matrix-forming compound or composition prevents the adhesive thermoplastic material from attaching to the printed object when the printed object is removed from the surface of the permanent print-surface coating after 3D printing is finished.

2. The coated print bed according to Claim 1 wherein the permanent print-surface coating comprises a mixture of a thermosetting polymer and the thermoplastic material.

3. The coated print bed according to Claim 1 or 2 wherein the thickness of the permanent print-surface coating is at least about 0.0127 mm (0.5 mil) and up to about 0.127 mm (5 mil) and preferably about 0.0254 mm (1 mil) to 0.0508 mm (2 mil).

4. The coated print bed according to any of Claims 1- 3 wherein the matrix-forming compound comprises a solvent- or water-based epoxy resin selected from the group consisting of Bisphenol A diglycidyl ether (DGEBA), tetraglycidyl methylenedianiline (TGMDA), and cycloaliphatic epoxy.

5. The coated print bed according to any of Claims 1-4 wherein the thermoplastic material is selected from the group consisting of an acrylic, polyacrylic acid, styrene acrylic, carboxylated styrene-butadiene latex, and non-carboxylated styrene-butadiene latex, a polystyrene, and a combination or blend thereof.

6. A method for printing an object, comprising the steps of:
i) providing a 3D printer configured for Fused Filament Fabrication (FFF) printing;
ii) preparing a print surface comprising the steps of:
a) forming a coating solution comprising a matrix-forming compound or composition, and an adhesive thermoplastic material;
b) applying the coating solution onto an upper surface (32) of a planar substrate plate (22) to form a print bed (20) having a smooth and planar coating, and
c) causing the applied coating to cure and harden into a permanent print-surface coating (24);
iii) attaching the coated print bed to the 3D printer; and
iv) printing a print object directly upon a surface of the permanent print surface coating of the coated print bed.

## Patentansprüche

1. Beschichtetes Druckbett (20) für einen 3D-Drucker, aufweisend:
a) eine Substratplatte (22), die ein ebenes Material mit einer oberen Oberfläche (32) ist; und
b) eine permanente Druckoberflächenbeschichtung (24), aufweisend ein Kompositmaterial in einer Schicht, wobei
die Kompositbeschichtungszusammensetzung auf die obere Oberfläche der Substratplatte aufgebracht wurde und gehärtet oder ausgehärtet wurde, um die permanente Druckoberflächenbeschichtung mit einer glatten, ebenen Grenzfläche, die permanent an der oberen Oberfläche der Druckbettsubstratplatte befestigt ist, auszubilden, und wobei sie eine haftfähige Grenzschicht zwischen einer ersten Schicht eines aufgebrachten Kunststoffdruckmaterials und dem beschichteten Druckbett bereitstellt, wobei das Kompositmaterial aufweist:
1) eine matrixbildende Verbindung oder Zusammensetzung, und
2) ein haftfähiges Material, das ein thermoplastisches Material aufweist,
wobei das haftfähige thermoplastische Material in einem Abschnitt der permanenten Druckoberflächenbeschichtung weich werden kann, wenn es durch das geschmolzene Kunststoff des aufgebrachten Kunststoffdruckmaterials berührt wird, was ein Anhaften des geschmolzenen Kunststoffs, das auf die Oberfläche der permanenten Druckoberflächenbeschichtung aufgetragen wird, fördert; und wobei die matrixbildende Verbindung oder Zusammensetzung das haftfähige thermoplastische Material daran hindert, sich an dem gedruckten Objekt zu befestigen, wenn das gedruckte Objekt von der Oberfläche der permanenten Druckoberflächenbeschichtung entfernt wird, nachdem das 3D-Drucken beendet wurde.

2. Beschichtetes Druckbett nach Anspruch 1, wobei die permanente Druckoberflächenbeschichtung eine Mischung aus einem wärmehärtenden Polymer und dem thermoplastischen Material aufweist.

3. Beschichtetes Druckbett nach Anspruch 1 oder 2, wobei die Dicke der permanenten Druckoberflächenbeschichtung zumindest ungefähr 0,0127 mm (0,5 mil) und höchstens ungefähr 0,127 mm (5 mil) und vorzugsweise ungefähr 0,0254 mm (1 mil) bis 0,0508 mm (2 mil) beträgt.

4. Beschichtetes Druckbett nach einem der Ansprüche 1-3, wobei die matrixbildende Verbindung ein lösemittel- oder wasserbasiertes Epoxidharz aufweist, das aus der Gruppe ausgewählt ist, die aus Bisphenol-A-Diglycidylether (DGEBA), Tetraglycidyl-Methylendianilin (TGMDA) und cykloaliphatischem Epoxid besteht.

5. Beschichtetes Druckbett nach einem der Ansprüche 1-4, wobei das thermoplastische Material aus der Gruppe ausgewählt ist, die aus Acryl, Polyacrylsäure, Styrolacrylat, carboxyliertem Styrol-Butadien-Latex und nichtcarboxyliertem Styrol-Butadien-Latex, einem Polystyrol und einer Kombination oder Mischung derselben besteht.

6. Verfahren zum Drucken eines Objekts, aufweisend die folgenden Schritte:
i) Bereitstellen eines 3D-Druckers, der für das Drucken nach dem System der Schmelzfilamentherstellung (FFF) konfiguriert ist;
ii) Herstellen einer Druckoberfläche, aufweisend die folgenden Schritte:
a) Bilden einer Beschichtungslösung, die eine matrixbildende Verbindung oder Zusammensetzung aufweist, und eines haftfähigen thermoplastischen Materials;
b) Aufbringen der Beschichtungslösung auf eine obere Oberfläche (32) einer ebenen Substratplatte (22), um ein Druckbett (20) mit einer glatten und ebenen Beschichtung auszubilden, und
c) Veranlassen der aufgebrachten Beschichtung, auszuhärten und sich in eine permanente Druckoberflächenbeschichtung (24) zu verhärten;
iii) Befestigen des beschichteten Druckbetts an dem 3D-Drucker; und
iv) Drucken eines Druckobjekts direkt auf eine Oberfläche der permanenten Druckoberflächenbeschichtung des beschichteten Druckbetts.

## Revendications

1. Lit d'impression revêtu (20) pour une imprimante en 3D, comprenant :
a) une plaque de substrat (22) qui est un matériau plan présentant une surface supérieure (32) ; et
b) un revêtement de surface d'impression permanent (24) comprenant un matériau composite dans une couche, dans lequel
la composition de revêtement composite a été appliquée sur la surface supérieure de la plaque de substrat et durcie ou polymérisée afin de former le revêtement de surface d'impression permanent présentant une surface d'interface lisse, plane qui est fixée de manière permanente à la surface supérieure de la plaque de substrat de lit d'impression, et qui fournit une couche d'interface adhésive entre une première couche d'un matériau d'impression plastique appliqué et le lit d'impression revêtu, dans lequel le matériau composite comprend :
(1) un composé ou une composition formant une matrice, et
(2) un matériau adhésif comprenant un matériau thermoplastique,
dans lequel le matériau thermoplastique adhésif dans une partie du revêtement de surface d'impression permanent peut ramollir lorsqu'il entre en contact avec le plastique fondu du matériau d'impression en plastique appliqué, en favorisant une adhésion du plastique fondu déposé sur la surface du revêtement de surface d'impression permanent ; et
dans lequel le composé ou la composition formant une matrice empêche que le matériau thermoplastique adhésif n'attache à l'objet imprimé quand l'objet imprimé est enlevé de la surface du revêtement de surface d'impression permanent une fois l'impression en 3D terminée.

2. Lit d'impression revêtu selon la revendication 1, dans lequel le revêtement de surface d'impression permanent comprend un mélange d'un polymère thermodurcissable et du matériau thermoplastique.

3. Lit d'impression revêtu selon la revendication 1 ou 2, dans lequel l'épaisseur du revêtement de surface d'impression permanent est d'au moins environ 0,0127 mm (0,5 mil) et jusqu'à environ 0,127 mm (5 mil) et de préférence d'environ 0,0254 mm (1 mil) à 0,0508 mm (2 mil).

4. Lit d'impression revêtu selon l'une quelconque des revendications 1 à 3, dans lequel le composé formant une matrice comprend une résine époxy à base de solvant ou d'eau sélectionnée dans le groupe constitué par du diglycidyl-éther de bisphénol A (DGEBA), de la tétraglycidyl-méthylènedianiline (TGMDA), et d'un époxy cycloaliphatique.

5. Lit d'impression revêtu selon l'une quelconque des revendications 1 à 4, dans lequel le matériau thermoplastique est sélectionné dans le groupe constitué d'un acrylique, d'un acide polyacrylique, d'un acrylique de styrène, d'un latex de styrène-butadiène carboxylé, et d'un latex de styrène-butadiène non-carboxylé, d'un polystyrène, et d'une combinaison ou mélange de ceux-ci.

6. Procédé pour imprimer un objet, comprenant les étapes consistant à :
i) fournir une imprimante en 3D configurée pour une impression par Fabrication de Filament Fondu (FFF) ;
ii) préparer une surface d'impression comprenant les étapes consistant à :
a) former une solution de revêtement comprenant un composé ou une composition formant une matrice, et un matériau thermoplastique adhésif ;
b) appliquer la solution de revêtement sur une surface supérieure (32) d'une plaque de substrat plane (22) afin de former un lit d'impression (20) présentant un revêtement lisse et plan, et
c) provoquer le durcissement et la polymérisation du revêtement appliqué en un revêtement de surface d'impression permanent (24) ;
iii) fixer le lit d'impression revêtu à l'imprimante en 3D ; et
iv) imprimer un objet d'impression directement sur une surface du revêtement de surface d'impression permanent du lit d'impression revêtu.
